# EUROPEAN PATENT SPECIFICATION

(11) **EP 2 771 179 B1**
(45) Date of publication and mention of the grant of the patent: **07.10.2015**
(21) Application number: 12794502.0
(22) Date of filing: 22.10.2012
(51) Int. Cl.: B29D 30/46, B26D 1/04, B26D 7/10, B26D 3/00, B29D 30/06

(54) **PROCESS AND APPARATUS FOR BUILDING SELF-SEALING TYRES FOR VEHICLE WHEELS**
VERFAHREN UND VORRICHTUNG ZUR HERSTELLUNG VON SELBSTVERSIEGELNDEN REIFEN FÜR FAHRZEUGRÄDER
PROCÉDÉ ET APPAREIL POUR CONSTRUIRE DES PNEUMATIQUES AUTO-OBTURATEURS POUR ROUES DE VÉHICULES

(30) Priority: 26.10.2011 IT MI20111936; 02.11.2011 US 201161554697 P
(43) Date of publication of application: 03.09.2014
(73) Proprietor: Pirelli Tyre S.p.A., 20126 Milano (IT)
(72) Inventor: D'ORIA, Francesco, I-20126 Milano (IT); SABBATANI, Enrico, I-20126 Milano (IT); PUPPI, Cristiano, I-20126 Milano (IT); MANCINI, Gianni, I-20126 Milano (IT)
(74) Representative: Tirloni, Bartolomeo
(86) International application number: PCT/IB2012/055793
(87) International publication number: WO 2013/061233

(56) References cited:
- EP-A1- 0 324 199
- EP-A1- 0 714 740
- EP-A1- 1 674 252
- EP-A1- 1 902 819
- EP-A2- 1 252 991
- WO-A1-01/89776
- DE-A1- 19 654 408

## Description

### Technical field

The present invention regards a process and an apparatus for building self-sealing tyres for vehicle wheels.

### State of the art

As known, self-sealing tyres are capable of preventing air loss and the ensuing deflation due to a puncture caused by a sharp object (for example a nail).

A self-sealing tyre for vehicle wheels generally comprises a carcass structure comprising at least one carcass ply having respectively opposite terminal zones respectively engaged to annular anchoring structures, generally referred to as "bead wires", integrated in the areas usually referred to by the name "beads", having an inner diameter substantially corresponding to a so-called "seating diameter" of the tyre on a respective mounting rim. The tyre also comprises a crown structure comprising at least one belt layer located in a radially outer position with respect to the carcass ply and a radially outer tread band with respect to the belt layer. Between the tread band and the belt layer/s there may be interposed a so-called "underlayer" made of elastomeric material with properties suitable to guarantee a stable union of the belt layer/layers with the tread band itself. On the lateral surfaces of the carcass structure, each extending from one of the lateral edges of the tread band up to the height of the respective annular structure for anchoring to the beads, there are also applied respective sidewalls made of elastomeric material.

The carcass ply is internally coated by a layer made of elastomeric material preferably based on butyl, usually referred to as "liner" having air impermeability characteristics extending from one bead to the other.

In a radially inner position with respect to the carcass ply there is arranged at least one layer made of polymeric sealing material which can adhere to a sharp object inserted thereinto and it can also flow inside the hole upon removing such object, thus sealing the very hole and preventing the exit of air from the tyre. Such material within the finished tyre (moulded and cured) must be deformable and sticky.

It should be observed that, as regards the present description and the subsequent claims, the term "elastomeric material" is used to indicate a composition comprising at least one elastomeric polymer and at least one reinforcing filler. Preferably, such composition further comprises additives such as, for example, a cross-linking agent and/or plasticisation agent. Due to the presence of the cross-linking agent, such material can be cross-linked through heating, so as to form the end product.

In the present description and in the subsequent claims, the term tyre "component" is used to indicate any functional tyre component (for example, under-liner, liner, carcass ply/plies, filling agent in the bead area, belt layer/s, sidewalls, sidewall inserts in the run flat tyres, anti-abrasive inserts, underlayer, tread band, fabric or metal reinforcements, reinforcement elements made of elastomeric material, etc) or a portion thereof.

It should be observed that, as regards the present description and the subsequent claims, the expression "sealing assembly" is used to indicate a semi-finished product in form of a band comprising a self-supporting thermoplastic film, for example made of polyamide or polyester, a layer made of sealing polymeric material associated to and supported by said self-supporting thermoplastic film and, preferably, a pair of elongated elements made of elastomeric material associated to opposite longitudinal edges of the layer made of polymeric sealing material and the self-supporting thermoplastic film.

It should be observed that the expression "polymeric sealing material" in this context is used to indicate a polymeric material provided, after the curing of the tyre, with viscoelastic and stickiness characteristics such to allow the material to flow within a perforation caused by a sharp-pointed element and adhere and be drawn by said moving sharp-pointed element. The layer of polymeric sealing material deforms under its own weight if not laid on any support.

Document US 2008/0142140 describes and illustrates a method and an apparatus for building a tyre incorporating a sealing layer. The method comprises the steps of: placing an inner liner on a tyre building drum, extruding a sealant composition to strips having tapered sidewalls, cutting the strip to a desired length, mounting the sealant over the inner liner in two or more zones. Each zone is separated by a circumferential divider which joins the inner liner to a cover layer forming a barrier to prevent migration of the sealant from one zone to another.

Document EP 0 714 740 A1 describes a system for cutting a strip of elastomeric material wherein an electrically heated knife blade is mounted on a carriage for moving the blade across a strip of elastomeric material. The carriage is propelled by a constant force.

Document EP 1 674 252 A1 describes a method for cutting an elastomeric laminate that may include a layer of reinforcement cords, into a desired length without cutting through the cords.

Document EP 1 902 819 A1 describes a method of cutting an elastomeric strip of material, including the step of advancing a strip of material a predetermined distance by a conveyor means; resisting reverse movement of the strip; tensioning the strip; and cutting simultaneously across the entire width of the strip through the thickness of the strip on a skive angle of 45 degrees or less.

### Object of the invention

The Applicant observed the need of optimising the processes for building self-sealing tyres with the aim of increasing productivity (by reducing the operating times) and improving the quality of the manufactured tyres.

Regarding this, the Applicant perceived that a self-sealing tyre may be advantageously built by preparing a sealing assembly cut to size, winding the same on a forming drum with mutual joining of the opposite ends and subsequent assembly of the other components to form a green tyre.

The Applicant observed that it is difficult to perform operations (for example transporting, handling, cutting, applying) using the sealing assembly due to the particular poor consistency and high adhesiveness of the sealing material. Actually, the sealing material tends to remain stuck to parts of machines and/or other elements with which it comes to contact and deform or tear upon trying to separate it from such parts/elements.

In particular, the Applicant observed that one of the most critical steps is cutting the sealing assembly to size. The high stickiness of the sealant material makes the mechanical cutting complex given that it generates a high compound transfer from the sealant material to the used blade.

Furthermore, the thermoplastic film has a high extension percentage and a very different mechanical consistency with respect to the sealing material.

In addition, the Applicant realised that the opposite cut ends (head and tail) of the sealing assembly should be clean with the aim of being able to join them correctly on the forming drum on which the sealing assembly is wound to obtain tyres of high quality and that are substantially identical to each other, thus the Applicant aims at obtaining a process and an apparatus capable of allowing cutting different materials forming the sealing assembly in a clean, precise and repeatable manner.

Thus, the Applicant perceived that the cutting blade plays a major role to obtain the aforementioned, in particular with reference to two operating parameters thereof, the advancement speed (before, during and after cutting) and the temperature thereof. Lastly, the Applicant found that controlling the temperature and speed of the cutting blade during the advancement thereof through the sealing assembly allows setting and automatically using the most correct quantity values for an efficient cutting of the sealing assembly, obtaining precise and repeatable cuts.

More specifically, according to a first aspect, the present invention relates to a process for building self-sealing tyres for vehicle wheels, comprising:
i. feeding a continuous sealing assembly;
ii. cutting the continuous sealing assembly to size;
iii. winding up the sealing assembly cut to size around a forming drum;
iv. forming components of a green tyre on the forming drum;
v. shaping, curing and moulding the tyre;
in which cutting the continuous sealing assembly to size comprises:
moving at a speed "V" a cutting blade heated to a temperature "T" along a cutting path transverse to the longitudinal extension of the continuous sealing assembly;
in which at least one of the speed "V" and the temperature "T" is varied along said path.

The Applicant observes that the sealing assembly is laid on the conveyor with the self-supporting thermoplastic film arranged at contact with the rest surface and the sealing material facing upwards, then the latter is cut to size and thus wound up on the forming drum with the self-supporting thermoplastic film arranged at contact with the radially outer surface of the forming drum.

Thus, the Applicant believes that using the heated blade as wells as controlling the temperature and speed allows:
obtaining a clean cut both on the sealing material and on the self-supporting thermoplastic film, without deforming and tearing the traversed materials and reducing the amount of material that remains stuck to the blade after each cut to the minimum;
rapidly cutting, reducing the cycle time;
cutting sealing assemblies with different dimensions obtaining the same results in terms of quality.

According to a second aspect, the present invention relates to an apparatus for building self-sealing tyres for vehicle wheels, comprising:
a forming drum;
a conveyor defining a rest surface for a continuous sealing assembly mobile along a feeding direction;
a cutting blade heated by means of current circulation to a temperature "T", mounted above the conveyor and mobile along a cutting path transverse to the feeding direction at a speed "V";
a control unit operatively connected to the cutting blade for controlling and adjusting the temperature "T" and the speed "V" along said cutting path;
in which the forming drum is operatively connected to the conveyor for receiving the sealing assembly cut to size by the cutting blade.

The present invention, in at least one of the aforementioned aspects, may also have one or more of the preferred characteristics described below. Preferably, before the cut, the cutting blade is moved close to the continuous sealing assembly at an approaching speed "V1" higher than a transit speed "V2" through said continuous sealing assembly.

Preferably, after the cut, the cutting blade is moved away from the sealing assembly cut to size at a moving-apart speed "V3" higher than a transit speed "V2" through said continuous sealing assembly.

Preferably, the approaching speed "V1" is higher than or equal to about 40 mm/s.

Preferably, the moving-apart speed "V3" is higher than or equal to about 50 mm/s.

When approaching and moving apart, the blade moves in the air without engaging any material and such speed must be the highest possible so as to reduce the total cutting time to the minimum.

Preferably, during cutting, the cutting blade passes through each of a pair of elongated elements made of elastomeric material associated with opposite longitudinal edges of the continuous sealing assembly at a first transit speed "V2"' lower than a second transit speed "V2"" of the cutting blade through a central portion of said continuous sealing assembly. Preferably, the first transit speed "V2"' is higher than or equal to about 4 mm/s.

Preferably, the first transit speed "V2"' is lower than or equal to about 7 mm/s.

Preferably, the second transit speed "V2"" is higher than or equal to about 20 mm/s.

Preferably, the second transit speed "V2"" is lower than or equal to about 30 mm/s.

Each of the elongated elements of elastomeric material is arranged astride the sealing material and the self-supporting thermoplastic film and projects beyond a lateral longitudinal edge of the sealing material. The elongated elements have poor consistency and resistance to the lateral thrust. Slightly before engaging each of the mentioned elongated elements, the speed of the blade is reduced to a value (V2') such to prevent the impact of the blade from causing a deformation (bending, curling) of the elongated element before the blade penetrates and starts cutting. Such speed may instead be increased (to V2") when the cutting blade passes through the central portion solely constituted by the sealing material and the self-supporting thermoplastic film.

According to a preferred embodiment of the process, before the cut, the cutting blade is heated to a preheating temperature "T1" higher than a cutting temperature "T2".

Preferably, the preheating temperature "T1" is higher than or equal to about 330 °C.

Preferably, the preheating temperature "T1" is lower than or equal to about 380 °C.

The cutting blade has very low heat inertia hence, in order to bring it to the correct cutting temperature in the least time possible and, preferably, during the step of approaching to the sealing assembly, it is superheated and then left to cool up to such correct value.

According to a preferred embodiment of the process, after cutting, the cutting blade is heated to a cleaning temperature "T3" higher than a cutting temperature "T2".

Preferably, the cleaning temperature "T3" is higher than or equal to about 450 °C.

Preferably, the cleaning temperature "T3" is lower than or equal to about 650 °C.

Upon completing cutting, the superheating of the blade burns and carbonises the residual material (in particular the sealing material) which was left stuck to the blade. This cleaning operation prevents the formation of progressive accumulations of sealing material between successive cuttings, thus considerably increasing the maintenance interval of the blade and increasing the operating life of the blade which can thus be used for a high number of cutting operations before being replaced. According to a preferred embodiment of the process, during the transit through the continuous sealing assembly, the cutting blade is heated to a cutting temperature "T2" higher than or equal to about 280°C.

Preferably, during the transit through the continuous sealing assembly, the cutting blade is heated to a cutting temperature "T2" lower than or equal to about 320 °C.

The cutting temperature allows easily cutting all the components of the sealing assembly given that it is much higher than the melting temperature of the self-supporting thermoplastic film.

According to a preferred embodiment of the process, before the feeding, the continuous sealing assembly - comprising a self-supporting thermoplastic film and a layer of sealing polymeric material associated with and supported by said self-supporting thermoplastic film - is kept wound up into a reel with a protective film disposed on the face of the layer of sealing polymeric material opposite to the self-supporting thermoplastic film.

The protective film allows winding up and preserving the sealing assembly into a reel without the turns sticking to each other due to the stickiness and deformability of the sealing polymeric material.

Preferably, the protective film is removed from the layer of sealing polymeric material at least before the cut.

Thus, the sealing assembly cut to size and wound up on the forming drum is already ready to receive other semi-finished products intended for forming the green tyre.

Preferably, the protective film is removed from the layer of sealing polymeric material during the feeding through unwinding the continuous sealing assembly from the reel.

This operation does not entail extending the machining times given that it occurs in line, i.e. simultaneously with the unwinding of the continuous sealing assembly and the feeding thereof towards the cutting blade. According to a preferred embodiment, the process comprises, before moving the cutting blade: advancing the continuous sealing assembly along a transport direction parallel to the longitudinal assembly extension thereof over a predefined distance; stopping the continuous sealing assembly; lifting a portion of said continuous sealing assembly disposed close to the cutting path.

The lifting of the portion in which the cutting is to be carried out tensions the continuous sealing assembly, facilitates the cutting and allows improving the cutting quality from a geometric point of view.

Preferably, the cutting path is substantially orthogonal to the feeding direction.

The cutting of the ends perpendicular to the longitudinal extension of the continuous sealing assembly serves to guarantee good head-tail alignment when the latter - cut to size - is wound up on the forming drum. According to a preferred embodiment of the apparatus, the cutting blade lies in a plane delimiting - with the rest surface - an angle different from 90 °.

Preferably, said angle is included between about 20° and about 30°.

The opposite ends of the sealing assembly - cut to size - are approached and joined on the forming drum close to respective inclined planes. The two ends do not require to be approached with millimetric precision, given that the coupling on the aforementioned inclined planes allows partly surmounting the ends without forming unwanted volumes in which dangerous air pockets can be formed.

According to a preferred embodiment of the apparatus, the cutting blade delimits a current conduction path having a region of reduced section designed to come to contact with the continuous sealing assembly to be cut.

At the area of reduced section there occurs greater heating of the blade right where there occurs contact with the material to be cut.

Preferably, the conveyor comprises:
a first part and a second part consecutively disposed along the feeding direction.

Even more preferably, the conveyor comprises:
a locating element placed between the first part and the second part, extending along a direction transverse to the feeding direction and mobile between a lowered position, in which it lies under the rest surface, and a raised position, in which it emerges beyond said rest surface.

Even more preferably the cutting blade is positioned close to said locating element.

The locating element allows tensioning the continuous sealing assembly, pushing from downwards upwards against the self-supporting thermoplastic film without touching (and thus damaging) the sealing polymeric material.

### Brief description of the drawings

Further characteristics and advantages will be more apparent from the detailed description of a preferred, but not exclusive, embodiment of a process and an apparatus for building self-sealing tyres for vehicle wheels, according to the present invention.

Such description will be outlined hereinafter with reference to the attached drawings, provided solely by way of non-limiting example wherein:
- figure 1 schematically shows a side elevation view of an apparatus for obtaining self-sealing tyres for vehicle wheels according to the present invention;
- figure 2 shows an enlarged element of the apparatus of figure 1;
- figure 3 shows a semi-finished product treated in the apparatus of figure 1;
- figures 4a and 4b respectively show a side view and a top view of a portion of the apparatus of figure 1 during an operating step of the process according to the invention;
- figures 5a and 5b respectively show the side view and the top view of figures 4a and 4b during a further operating step of the process according to the invention;
- figure 6 is a chart representing physical quantities of the process according to the invention;
- figure 7 schematically shows - in radial semi-section - a self-sealing tyre for vehicle wheels produced using the apparatus and according to the process of the present invention.

### Detailed description of preferred embodiments of the invention

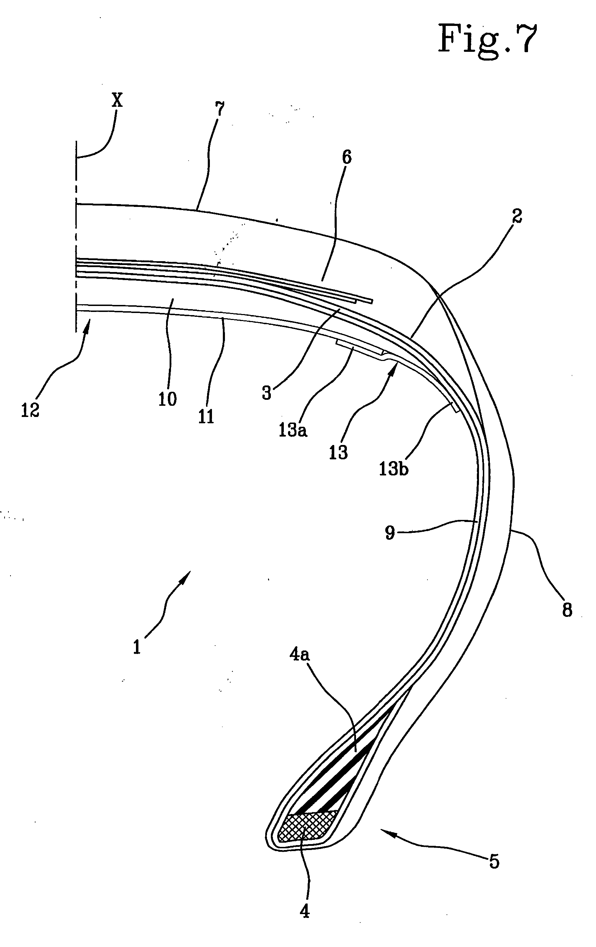

A self-sealing tyre for vehicle wheels, generally comprising a carcass structure 2 comprising at least one carcass ply 3 having respectively opposite terminal zones engaged to respective annular anchoring structures 4, possibly associated to elastomeric fillers 4a, integrated in the areas 5 usually identified with the name of "beads" is indicated with reference number 1 in figure 7. The carcass ply 3 comprises a plurality of fabric or metal reinforcement cords disposed parallel to each other and at least partly covered by a layer of elastomeric material.

To the carcass structure 2 there is associated a belt structure 6 comprising one or more belt layers, arranged radially superimposed over each other and with respect to the carcass ply 3 and having typically metal reinforcement cords. Such reinforcement cords may be cross-oriented with respect to the direction of circumferential development of the tyre 1.

In a radial position outside the belt structure 6 there is applied a tread band 7 of elastomeric material, same case applying to other semi-finished products forming the tyre 1.

In addition, on the lateral surfaces of the carcass structure 2, each extending from one of the lateral edges of the tread band 7 up to close to the respective annular structure for anchoring to the beads 5, there are also applied - in an axially outer position - respective sidewalls 8 of elastomeric material.

A radially inner surface of the tyre 1 is also preferably entirely covered by a layer of elastomeric material substantially impermeable to air or so-called liner 9.

The self-sealing tyre 1 also comprises a layer of sealing polymeric material 10 arranged close to a crown region of the tyre 1 and in a radially inner position with respect to the liner 9. The layer of sealing polymeric material 10 extends over the entire circumferential development of the tyre 1. The layer of sealing polymeric material 10 has a maximum thickness arranged substantially close to the equatorial plane "X" of the finished tyre 1, i.e. moulded and cured, and it narrows towards the axial ends of the crown area.

By way of example, the sealing polymeric material may comprise, between 40 phr and 80 phr of a synthetic or natural elastomer, between 20 phr and 60 phr of a block elastomer, between 40 phr and 60 phr of process oil, between 15 and 60 phr of at least one bonding agent, and between 1 and 40 phr of at least one reinforcing filler. According to a preferred embodiment the sealing polymeric may also comprise about 1 phr and about 20 phr of at least one homogenising agent. In a further embodiment, the sealing polymeric material may also comprise between 0.05 phr and 5 phr of at least one peptizing agent.

In a radially inner position with respect to the layer of sealing polymeric material 10 and at direct contact with said layer of sealing polymeric material 10 there is disposed a self-supporting thermoplastic film 11. The self-supporting thermoplastic film 11 extends, as the layer of sealing polymeric material 10, over the entire circumferential development of the tyre 1 and it has a length, i.e. an axial extension, slightly smaller than the axial extension of said layer 10.

Preferably, the self-supporting thermoplastic film 11 is made of polyamide selected from among: nylon 6, nylon 66, nylon 46, nylon 11, nylon 12, nylon 610, nylon 612, nylon 6/66 copolymer, nylon 6/66/610 copolymer, nylon MXD 6, nylon 6T, nylon 6/6T copolymer, nylon 66/PP copolymer, nylon 66/PPS copolymer, alone or combined. Preferably the self-supporting thermoplastic film 11 is made of polyester selected from among: polybutylene terephthalate (PBT), polyethylene terephthalate (PET), polyethylene isophthalate (PEI), polybutylene terephthalate/ tetramethylene glycol copolymer, PET/PEI copolymer, polyarylate and polybutylene naphthalate.

The layer of sealing polymeric material 10 and the self-supporting thermoplastic film 11 form a sealing assembly 12. The sealing polymeric material 10, when a sharp-pointed object (such as for example a nail) penetrates into the tyre and passes through the sealing assembly 12, is capable of adhering to the object inserted thereinto and it may also flow within the hole when the object is removed, thus sealing the hole and preventing the exit of air from the tyre.

The sealing assembly 12 of the preferred and illustrated embodiment further comprises two elongated elements made of elastomeric material 13, each arranged close to an edge thereof. An axially inner portion 13a of each elongated element made of elastomeric material 13 is superimposed to the sealing assembly 12 and it is arranged in a position radially inside said sealing assembly 12. An axially outer portion 13b of each elongated element made of elastomeric material 13 lies at direct contact with the liner 9. The expression axially inner portion 13a is used to indicate a portion close to an equatorial plane "X" of the tyre 1 with respect to the axially outer portion 13b. More in detail, the axially inner portion 13a in turn has an axially inner portion directly applied on the self-supporting thermoplastic film 11 and an axially outer portion directly applied on a surface of the layer of sealing polymeric material 10. Actually, the layer of sealing polymeric material 10 has a greater axial development than the axial development of the self-supporting thermoplastic film 11. Hence, each elongated element made of elastomeric material 13 is at direct contact both with the layer of sealing polymeric material 10 and with the self-supporting thermoplastic film 11.

The tyre 1 described above is built by assembling the components on one or more forming drums.

For example, a plant for producing self-sealing tyres 1 comprises a carcass building line, at which the forming drums 14 are moved between different stations for dispensing semi-finished products predisposed for forming, on each forming drum 14, a carcass sleeve comprising: the sealing assembly 12, the carcass ply 3, the liner 9, the annular anchoring structures 4 and possibly at least one part of the sidewalls 8. Simultaneously, in a line for building outer sleeves, one or more auxiliary drums are sequentially moved between different work stations predisposed for forming - on each auxiliary drum - an outer sleeve, comprising at least the belt structure 6, the tread band 7, and possibly at least one part of the sidewalls 8. In addition, the plant comprises an assembly station whereat the outer sleeve is coupled to the carcass sleeve. The built tyres 1 are lastly transferred to at least one moulding and cutting unit.

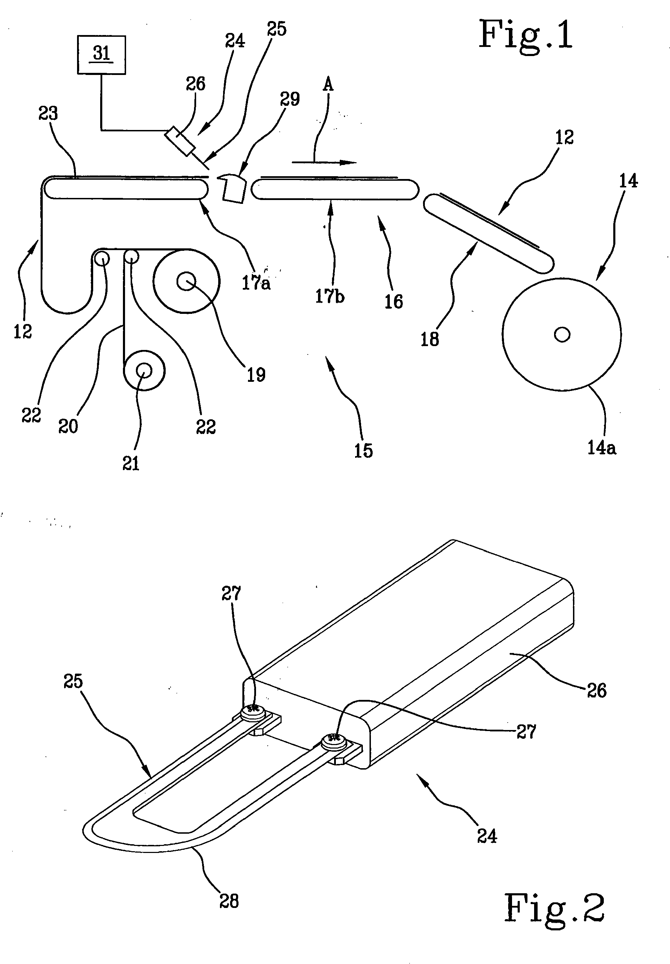

With reference to figure 1, an apparatus for building self-sealing tyres for vehicle wheels according to the present invention was indicated in its entirety with 15.

The apparatus 15 comprises a conveyor 16 in turn comprising a first part 17a, a second part 17b and a third part 18 disposed consecutively along a feeding direction "A" and each defined by a conveyor belt. The first part 17a and the second part 17b lie on the same horizontal plane, supported by a suitable framework (not illustrated), and the third part 18 is inclined downwards starting from the second part 17b.

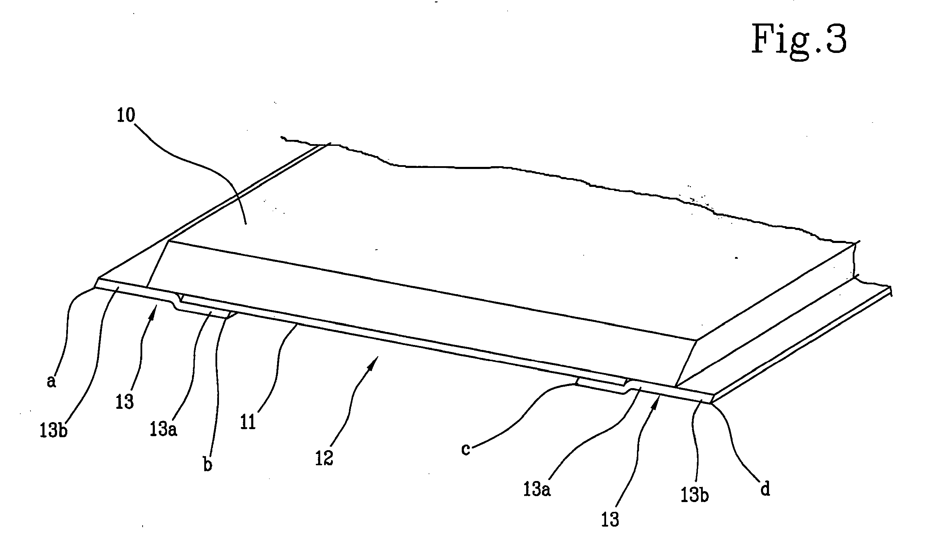

Beneath the first part 17a there is positioned a reel-holder 19 on which there is temporarily wound - into a reel - the continuous tape sealing assembly 12 (illustrated in perspective view in figure 3) associated to a protective film 20. The protective film 20 (not illustrated in figure 3) is applied on the face of the layer of sealing polymeric material 10 opposite to the face associated to the self-supporting thermoplastic film 11 and to the elongated elements of elastomeric material 13.

In proximity of the reel-holder 19 there are also disposed an auxiliary reel-holder 21 and guide rollers 22.

The first part 17a, the second part 17b and the third part 18 of the conveyor 16 define a rest surface 23 formed by the upper branches of the respective conveyor belts.

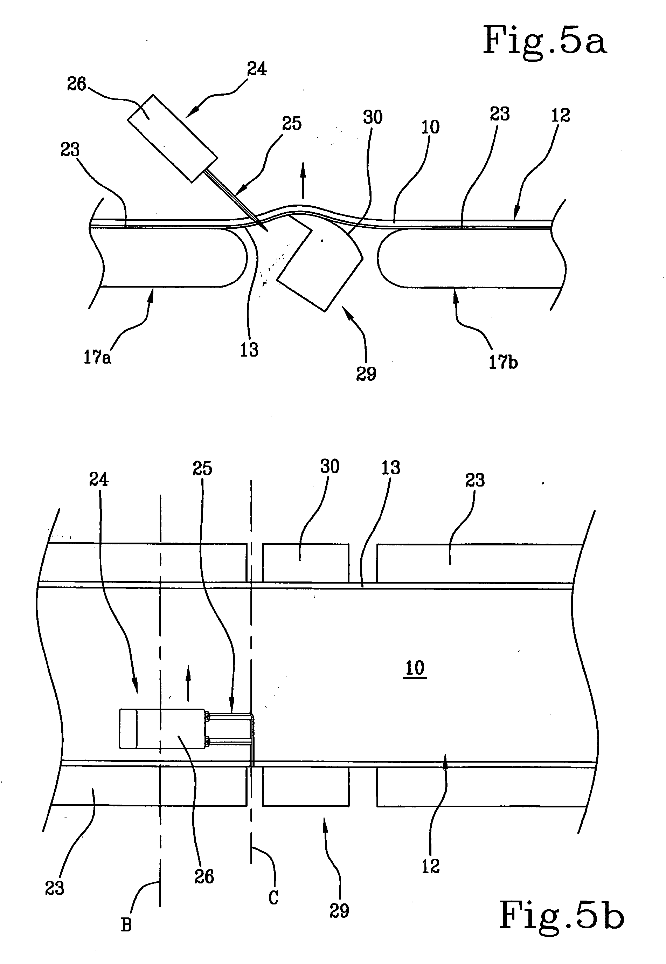

Above the conveyor 16 there disposed a hot blade cutting device 24 comprising a cutting blade 25 whose end ends up in a region located between the first part 17a and the second part 17b of the conveyor 16. The cutting device 24 is moveable, through a motor and a guide (not illustrated), along a cutting direction "B" substantially perpendicular to the feeding direction "A" and to the longitudinal extension of the continuous sealing assembly 12, so as to move the cutting blade 25 along a cutting path "C" (figure 5b) transverse to the longitudinal extension of the continuous sealing assembly 12 and parallel to the rest surface 23.

The cutting blade 25 is an electric conductor and it is heated due to the Joule effect by circulating electronic control current.

As better illustrated in figure 2, the cutting device 24 comprises a support 26 for the cutting blade 25 which has two terminals or electrical terminals 27. The cutting blade 25 comprises a substantially U or V-shaped laminar body with each of the free ends of the "U" or the "V"-shape constrained to a respective terminal 27. Therefore, the cutting blade 25 delimits an electric conduction path which develops between the two terminals 27. The thickness of the laminar body is substantially constant and, in a plan view, such laminar body has a region with reduced width 28 which corresponds to a reduced section of current flow, with respect to the rest of the conduction path. Such area with reduced width 28 is located at the engagement portion of the blade 25 designed to come to contact with the continuous sealing assembly 12 to be cut. The terminals 27 are connected to a source of electrical power and the cutting device 24 comprises a power and control electronics of the current for feeding the cutting blade 25.

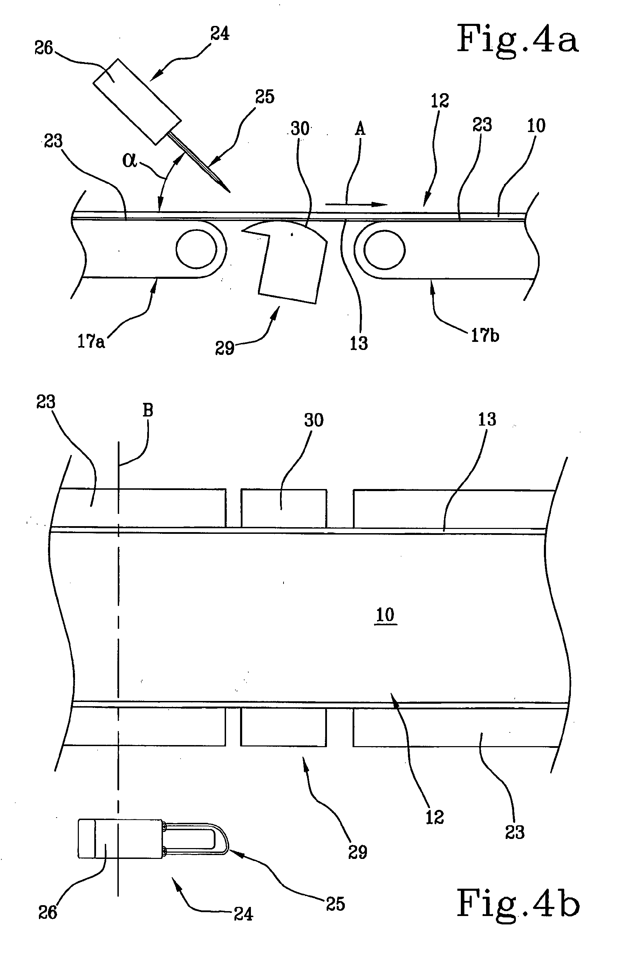

The laminar body lies in a plane which delimits with the rest surface 23 (and with the continuous sealing assembly 12 lying on the first part 17a of the conveyor 16) an acute angle "α" of about 25° (figure 4a). In the illustrated embodiment, such acute angle "α" opens towards the first end of the first part 17a of the conveyor 16.

Between the first part 17a and the second part 17b of the conveyor 16, close to an interspace between the two, there is positioned a locating element 29 having the shape of a bar and it develops parallel to the cutting path "B" and along a direction transverse to the feeding direction "A". The locating element 29 has an engagement surface 30 designed to come to contact with the self-supporting thermoplastic film 11 and with the elongated elements made of elastomeric material 13 of the continuous sealing assembly 12 when the latter lies on the conveyor 16. More in detail, the locating element 29 is moveable, moved by a suitable actuator not illustrated, between a lowered position and a raised position. In the lowered position of figures 4a and 4b, the locating element 29 lies below a virtual plane obtained by the extension of the rest surface 23 of the conveyor 16 on the interspace between the first part 17a and the second part 17b. In the raised position of figure 5a and 5b, the locating element 29 emerges beyond said virtual plane and the engagement surface 30 pushes against the continuous sealing assembly 12.

Downstream of the conveyor 16, close to a terminal end of the third part 18, there can be positioned one of the forming drums 14 ready to receive - on a radially outer surface 14a thereof - a piece of the continuous sealing assembly 12, as described in detail hereinafter.

The continuous sealing assembly 12 unwound from the respective reel is guided (through guide rollers 22) and fed towards the first end of the first part 17a of the conveyor 16 and arranged on the rest surface 23. Along the path of advancement of the continuous sealing assembly 12, between the reel and the aforementioned first end, the protective film 20 is detached from the continuous sealing assembly 12, while the latter advances, and then wound on the auxiliary reel-holder 21.

The continuous sealing assembly 12 is advanced step-by-step in the feeding direction "A" with the self-supporting thermoplastic film 11 laid against the rest surface 23 and the layer of sealing polymeric material 10 facing upwards. More in detail, at each step the continuous sealing assembly 12 is advanced, on the first part 17a and on the second part 17b of the conveyor 16, beyond the cutting blade 25 for a portion corresponding to the circumferential development of the forming drum 14 (figures 4a and 4b). During the advancement, the locating element 29 lies in the first position and it does not interfere with the continuous sealing assembly 12 (figure 4a) while the cutting blade 25 lies beside the conveyor 16 (figure 4b).

The conveyor 16 is thus stopped and the locating element 29 is raised and moved to the second position. The engagement surface 30 lies and pushes against the continuous sealing assembly 12, raising a portion (figures 5a and 5b) thereof while the rest of the continuous sealing assembly 12 remains at contact with the rest surface 23. The raising of such portion tensions the area of the continuous sealing assembly 12 in which the cutting will be carried out. In addition, the raising moves the aforementioned portion of the continuous sealing assembly 12 on the trajectory of the cutting blade 25.

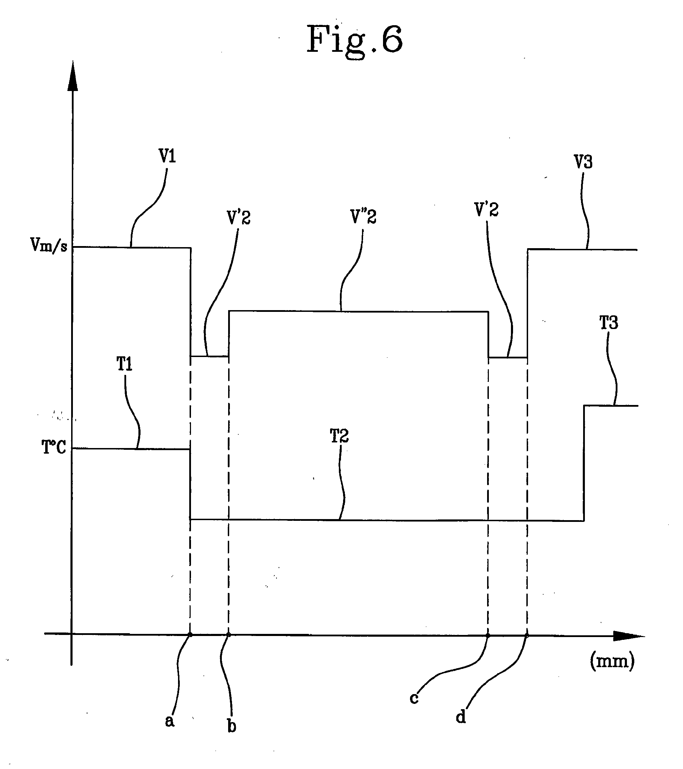

The cutting blade 25 is heated to a temperature "T" function of the time and/or the position thereof in the space and moved along the cutting path "B" at a speed "V" function of the time and/or the position thereof on the space. The chart of figure 6 represents an example of the development of such quantities as a function of the space "s" along the cutting path "C". The step representation of the quantities in the chart of figure 6 is solely by way of example. Actually, the variation thereof reveals ramps and fluctuations.

In such figure 6, the point indicated with letter "a" represents a first lateral edge of the first of the two elongated elements of elastomeric material 13; the point indicated with the letter "b" represents a second lateral edge of the first elongated element made of elastomeric material 13; the point indicated with the letter "c" represents a first lateral edge of the second of the two elongated elements of elastomeric material 13; the point indicated with the letter "d" represents a second lateral edge of the second elongated element made of elastomeric material 13. Such points are also indicated in figure 3. The space included between "a" and "b" is occupied width-wise by the first elongated element made of elastomeric material 13; the space included between "c" and "d" is occupied width-wise by the second elongated element made of elastomeric material 13.

While it is still immobile beside the conveyor 16 and/or during the approaching to the continuous sealing assembly 12, the cutting blade 25 is heated up to a preheating temperature "T1" of about 350°C. Besides, the speed "V1" for approaching the blade 25 to the continuous sealing assembly 12 is maintained equivalent to about 60 mm/s.

Once in proximity of the axially outer portion 13b of the first elongated element made of elastomeric material 13 (point "a" of figure 6), the blade 25 is slowed up to a first transit speed "V2"' of about 5 mm/s and with such speed it comes to contact with the first elongated element made of elastomeric material 13. Such first transit speed "V2"' is maintained constant during the cutting of the first elongated element made of elastomeric material 13 over the entire width thereof (from point "a" to point "b" of figure 6). Simultaneously with the slowing, the power of the heating current is reduced so as to lower the temperature "T" of the cutting blade 25 up to a cutting temperature "T2" of about 300°C. During the movement from point "a" to point "b" the cutting blade 25 encounters and cuts the entire first elongated element made of elastomeric material 13, a portion of the self-supporting thermoplastic film 11 and a portion of the sealing polymeric material 10.

Upon reaching point "b", i.e. the end of the first elongated element made of elastomeric material 13, the speed of the cutting blade 25 is increased up to a second transit speed "V2"" of about 25 mm/s and maintained constant up to point "c" while the cutting temperature remains equivalent to about 300°C. During the movement from point "b" to point "c" the cutting blade 25 passes through and cuts the self-supporting thermoplastic film 11 and the sealing polymeric material 10 alone.

When the cutting blade 25 reaches point "c", i.e. the second elongated element made of elastomeric material 13, it is slowed once again up to the first transit speed "V2"' of about 5 mm/s and with such speed it passes through - width-wise - the entire aforementioned second elongated element up to point "d". The cutting temperature "T2" is maintained still equivalent to about 300°C. During the movement from point "c" to point "d" the cutting blade 25 encounters and cuts the entire second elongated element made of elastomeric material 13, a portion of the self-supporting thermoplastic film 11 and a portion of the sealing polymeric material 10.

Upon completing the cutting, i.e. slightly after the cutting blade 25 exits from the sealing assembly 12 cut to size (point "d"), the speed is once again increased up to a moving-apart speed "V3" of about 70 mm/s. During the moving away from the sealing assembly 12 cut to size or upon completing such moving-apart, the temperature is increased up to a cleaning temperature "T3" of about 600°C. This temperature peak carbonizes the residues of material which remain stuck to the blade 25 during cutting. Such carbonised residues drop from the cutting blade 25 into a special collection container, not illustrated, and they are thus removed and disposed.

The apparatus 15 comprises an electronic control unit 31 (schematically illustrated in figure 1) operatively connected at least to the conveyor 16, to the cutting device 24, to the locating element 29 for automatically controlling the operation of the process. In particular, the control unit 31 controls the speed "V" and the temperature "T" of the cutting blade 25. According to a first embodiment, the control unit 31 is capable of varying the speed "V", operating on the motor of the cutting device 24, as a function of the position of the cutting blade 25 along the cutting path "C". The curve of the speed "V" as a function of the space "s" is set by the operator according to the geometric characteristics of the continuous sealing assembly to be cut.

The control unit 31 is capable of varying the temperature "T", operating on a feeding unit of the current circulating in the cutting blade 25, as a function of the position of the cutting blade 25 along the cutting path "C". The temperature curve "T" as a function of the space "s" is set by the operator according to the geometric characteristics of the continuous sealing assembly to be cut. A temperature sensor detects - instant by instant - the actual temperature of the cutting blade 25 and the control unit 31, whose position of the blade 25 is also known, it operates in feedback so as to maintain the temperature detected around the set value for each position.

Due to the angle "α" of inclination of the cutting blade 25, the previously cut end of the sealing assembly 12 cut to size has an exposed surface inclined by an angle substantially equivalent to "α" with respect to the lying plane thereof (figure 3).

The sealing assembly 12 cut to size is advanced on the second part 17b and then on the third part 18 of the conveyor 16 and thus disposed on the radially outer surface 14a of the forming drum 14 (figure 1) joining and mutually sealing the opposite ends of said sealing assembly 12 cut to size.

## Claims

1. A process for building self-sealing tyres for vehicle wheels, comprising:
i. feeding a continuous sealing assembly (12);
ii. cutting the continuous sealing assembly (12) to size;
iii. winding up the sealing assembly (12) cut to size around a forming drum (14);
iv. forming components of a green tyre (1) on the forming drum (14);
v. shaping, curing and moulding the tyre,
wherein cutting to size the continuous sealing assembly (12) comprises:
- moving a cutting blade (25) heated to a temperature "T" at a speed "V" along a cutting path (C) transverse to the longitudinal extension of the continuous sealing assembly;
wherein at least one of the speed "V" and the temperature "T" is varied along said path (C).

2. A process as claimed in claim 1, wherein before the cut, the cutting blade (25) is moved close to the continuous sealing assembly (12) at an approaching speed "V1" higher than a transit speed "V2" through said continuous sealing assembly (12).

3. A process as claimed in claim 1 or 2, wherein, after the cut, the cutting blade (25) is moved away from the sealing assembly (12) cut to size at a moving-apart speed "V3" higher than a transit speed "V2" through said continuous sealing assembly (12).

4. A process as claimed in claim 1, 2 or 3, wherein during cutting, the cutting blade (25) passes through each of a pair of elongated elements of elastomeric materials (13) associated with opposite longitudinal edges of the continuous sealing assembly (12) at a first transit speed "V2"' lower than a second transit speed "V2"" of the cutting blade (25) through a central portion of said continuous sealing assembly (12).

5. A process as claimed in claim 4, wherein the first transit speed "V2"' is higher than or equal to about 4 mm/s and/or lower than or equal to about 7 mm/s.

6. A process as claimed in claim 4, wherein the second transit speed "V2"" is higher than or equal to about 20 mm/s and/or lower than or equal to about 30 mm/s.

7. A process as claimed in claim 1, wherein before the cut, the cutting blade (25) is heated to a preheating temperature "T1" higher than a cutting temperature "T2".

8. A process as claimed in claim 1, wherein, after the cut, the cutting blade (25) is heated to a cleaning temperature "T3" higher than a cutting temperature "T2".

9. A process as claimed in claim 7, wherein the preheating temperature "T1 is higher than or equal to about 330°C and/or lower than or equal to about 380°C.

10. A process as claimed in claim 8, wherein the cleaning temperature "T3" is higher than or equal to about 450°C and/or lower than or equal to about 650°C.

11. A process as claimed in claim 1, wherein, during transit through the continuous sealing assembly (12), the cutting blade (25) is heated to a cutting temperature "T2" higher than or equal to about 280°C and/or lower than or equal to about 320°C.

12. A process as claimed in claim 1, wherein before the feeding, the continuous sealing assembly (12) comprising a self-supporting thermoplastic film (11) and a layer of sealing polymeric material (10) associated with and supported by said self-supporting thermoplastic film (11), is kept wound up into a reel with a protective film (20) disposed on the face of the layer of sealing polymeric material (10) opposite to the self-supporting thermoplastic film (11) and wherein the protective film (20) is removed from the layer of sealing polymeric material (10) at least before the cut.

13. A process as claimed in claim 1, comprising, before moving the cutting blade (25): advancing the continuous sealing assembly (12) along a transport direction (A) parallel to the longitudinal assembly extension over a predetermined distance; stopping the continuous sealing assembly (12); lifting a portion of said continuous sealing assembly (12) disposed close to the cutting path (C).

14. An apparatus for building self-sealing tyres for vehicle wheels, comprising:
- a forming drum (14);
- a conveyor (16) defining a rest surface (23) for a continuous sealing assembly (12) that is movable along a feeding direction (A);
- a cutting blade (25) heated by means of current circulation to a temperature "T", mounted above the conveyor (16) and movable along a cutting path (C) transverse to the feeding direction (A) at a speed "V"; wherein the forming drum (14) is operatively connected to the conveyor (16) for receiving the sealing assembly (12) cut to size by the cutting blade (25),
**characterized in that** the control unit (31) is operatively connected to the cutting blade (25) for controlling and adjusting the temperature "T" and speed "V" along said cutting path (C).

15. An apparatus as claimed in claim 14, wherein the conveyor (16) comprises:
- a first part (17a) and a second part (17b) disposed consecutively along the feeding direction (A) and wherein the conveyor (16) comprises:
- a locating element (29) placed between the first part (17a) and the second part (17b), extending along a direction transverse to the feeding direction (A) and movable between a lowered position, in which it lies under the rest surface (23) and a raised position, in which it emerges beyond said rest surface (23).

## Patentansprüche

1. Verfahren zur Herstellung selbstdichtender Reifen für Fahrzeugräder, wobei das Verfahren umfasst:
i. Zuführen einer kontinuierlichen Dichtungsanordnung (12);
ii. Zuschneiden der kontinuierlichen Dichtungsanordnung (12);
iii. Aufwickeln der zugeschnittenen Dichtungsanordnung (12) um eine Formungstrommel (14);
iv. Bilden von Komponenten eines Rohreifens (1) an der Formungstrommel (14);
v. Formen, Vulkanisieren und Ausformen des Reifens,
wobei das Zuschneiden der kontinuierlichen Dichtungsanordnung (12) umfasst:
- Bewegen einer auf eine Temperatur "T" aufgeheizten Schneidklinge (25) mit einer Geschwindigkeit "V" entlang einer Schnittbahn (C) quer zu der Längserstreckung der kontinuierlichen Dichtungsanordnung;
wobei zumindest entweder die Geschwindigkeit "V" und/oder die Temperatur "T" entlang des Pfads (C) variiert wird.

2. Verfahren nach Anspruch 1, wobei vor dem Schnitt die Schneidklinge (25) mit einer Annäherungsgeschwindigkeit "V1" an die kontinuierliche Dichtungsanordnung (12) angenähert wird, die höher ist als eine Durchgangsgeschwindigkeit "V2" durch die kontinuierliche Dichtungsanordnung (12).

3. Verfahren nach Anspruch 1 oder 2, wobei nach dem Schnitt die Schneidklinge (25) von der zugeschnittenen Dichtungsanordnung (12) mit einer Wegbewegungsgeschwindigkeit "V3" wegbewegt wird, die höher als eine Durchgangsgeschwindigkeit "V2" durch die kontinuierliche Dichtungsanordnung (12) ist.

4. Verfahren nach Anspruch 1, 2 oder 3, wobei während des Schneidens die Schneidklinge (25) durch jedes Element eines Paars von länglichen Elementen aus Elastomermaterialien (13) passiert, die gegenüberliegenden Längsrändern der kontinuierlichen Dichtungsanordnung (12) zugeordnet sind, mit einer ersten Durchgangsgeschwindigkeit "V2", die niedriger ist als eine zweite Durchgangsgeschwindigkeit "V2"" der Schneidklinge (25) durch einen zentralen Abschnitt der kontinuierlichen Dichtungsanordnung (12).

5. Verfahren nach Anspruch 4, wobei die erste Durchgangsgeschwindigkeit "V2" höher als oder gleich etwa 4 mm/s und/oder niedriger als oder gleich etwa 7 mm/s ist.

6. Verfahren nach Anspruch 4, wobei die zweite Durchgangsgeschwindigkeit "V2" höher als oder gleich etwa 20 mm/s und/oder niedriger als oder gleich etwa 30 mm/s ist.

7. Verfahren nach Anspruch 1, wobei vor dem Schnitt die Schneidklinge (25) auf eine Vorheiztemperatur "T1" aufgeheizt wird, die höher ist als eine Schnitttemperatur "T2".

8. Verfahren nach Anspruch 1, wobei nach dem Schnitt die Schneidklinge (25) auf eine Reinigungstemperatur "T3" aufgeheizt wird, die höher ist als eine Schnitttemperatur "T2".

9. Verfahren nach Anspruch 7, wobei die Vorheiztemperatur "T1" höher als oder gleich etwa 330 °C und/oder niedriger als oder gleich etwa 380 °C ist.

10. Verfahren nach Anspruch 8, wobei die Reinigungstemperatur "T3" höher als oder gleich etwa 450 °C und/oder niedriger als oder gleich etwa 650 °C ist.

11. Verfahren nach Anspruch 1, wobei während des Durchgangs durch die kontinuierliche Dichtungsanordnung (12) die Schneidklinge (25) auf eine Schnitttemperatur "T2" aufgeheizt wird, die höher als oder gleich etwa 280 °C und/oder niedriger als oder gleich etwa 320 °C ist.

12. Verfahren nach Anspruch 1, wobei vor dem Zuführen die kontinuierliche Dichtungsanordnung (12) umfassend eine selbsttragende thermoplastische Folie (11) und eine Schicht aus Polymerdichtungsmaterial (10), die der selbsttragenden thermoplastischen Folie zugeordnet ist und davon getragen wird, zu einer "Rolle" aufgewickelt aufbewahrt wird, mit einer Schutzfolie (20), die auf der Seiten der Schicht aus Polymerdichtmaterial (10), der selbsttragenden thermoplastischen Folie (11) entgegengesetzt, angeordnet ist, und wobei die Schutzfolie (20) von der Schicht aus Polymerdichtmaterial (10) zumindest vor dem Schnitt entfernt wird.

13. Verfahren nach Anspruch 1, umfassend folgende Schritte vor dem Bewegen der Schneidklinge (25): Vorschieben der kontinuierlichen Dichtungsanordnung (12) über einen vorbestimmten Abstand entlang einer Transportrichtung (A) parallel zu der Längserstreckung der Anordnung; Anhalten der kontinuierlichen Dichtungsanordnung (12); Anheben eines Abschnitts der kontinuierlichen Dichtungsanordnung (12), die nahe der Schnittbahn (C) angeordnet ist.

14. Vorrichtung zur Herstellung selbstdichtender Reifen für Fahrzeugräder, wobei die Vorrichtung umfasst:
- eine Formungstrommel (14);
- eine Fördereinrichtung (16), die eine Auflagefläche (23) für eine kontinuierliche Dichtungsanordnung (12) definiert, die entlang einer Zuführrichtung (A) beweglich ist;
- eine Schneidklinge (25), die mittels Stromzirkulation auf eine Temperatur aufheizbar ist, über der Fördereinrichtung (16) montiert und entlang einer Schnittbahn (C) quer zu der Zuführuchtung (A) mit einer Geschwindigkeit "V" beweglich ist;
wobei die Formungstrommel (14) mit der Fördereinrichtung (16) wirkverbunden ist, um die von der Schneidklinge (25) zugeschnittene Dichtungsanordnung (12) aufzunehmen,
**dadurch gekennzeichnet, dass** die Steuereinheit (31) mit der Schneidklinge (25) wirkverbunden ist, um die Temperatur "T" und die Geschwindigkeit "V" entlang der Schnittbahn (C) zu steuern und einzustellen.

15. Vorrichtung nach Anspruch 14, wobei die Fördereinrichtung (16) umfasst:
- einen ersten Teil (17a) und einen zweiten Teil (17b), die aufeinander folgend entlang der Zuführrichtung (A) angeordnet sind, und wobei die Fördereinrichtung (16) umfasst:
- ein Positionierungselement (29), das zwischen dem ersten Teil (17a) und dem zweiten Teil (17b) angeordnet ist, sich entlang einer Richtung quer zu der Zuführuchtung (A) erstreckt und zwischen einer abgesenkten Stellung, in welcher es unter der Auflagefläche (23) liegt, und einer angehobenen Stellung, in welcher es sich über die Auflagefläche (23) erhebt, beweglich ist.

## Revendications

1. Procédé pour construire des pneus auto-obturants pour roues de véhicule, comprenant :
i. l'alimentation d'un ensemble d'obturation continu (12) ;
ii. la découpe à la dimension voulue de l'ensemble d'obturation continu (12) ;
iii. l'enroulement de l'ensemble d'obturation (12) découpé à la dimension voulue autour d'un tambour de formage (14) ;
iv. la formation des composants d'un pneu cru (1) sur le tambour de formage (14) ;
v. le galbage, la vulcanisation et le moulage du pneu,
dans lequel la découpe à la dimension voulue de l'ensemble d'obturation continu (12) comprend le fait :
- de déplacer une lame de coupe (25) chauffée à une température «T» à une vitesse «V» le long d'un trajet de coupe (C) transversal à l'extension longitudinale de l'ensemble d'obturation continu ;
dans lequel au moins l'une de la vitesse «V» et de la température «T» est variée le long dudit trajet (C).

2. Procédé tel que revendiqué dans la revendication 1, dans lequel, avant la découpe, la lame de coupe (25) est déplacée à proximité de l'ensemble d'obturation continu (12) à une vitesse d'approche «V1» supérieure à une vitesse de déplacement «V2» à travers ledit ensemble d'obturation continu (12).

3. Procédé tel que revendiqué dans la revendication 1 ou 2, dans lequel, après la découpe, la lame de coupe (25) est déplacée loin de l'ensemble d'obturation continu (12) découpé à la dimension voulue à une vitesse d'écartement «V3» supérieure à une vitesse de déplacement «V2» à travers ledit ensemble d'obturation continu (12).

4. Procédé tel que revendiqué dans la revendication 1, 2 ou 3, dans lequel au cours de la découpe, la lame de coupe (25) passe à travers chacun d'une paire d'éléments allongés de matériaux élastomères (13) associés à des bords longitudinaux opposés de l'ensemble d'obturation continu (12) à une première vitesse de déplacement «V2'» inférieure à une deuxième vitesse de déplacement «V2"» de la lame de coupe (25) à travers une partie centrale dudit ensemble d'obturation continu (12).

5. Procédé tel que revendiqué dans la revendication 4, dans lequel la première vitesse de déplacement «V2'» est supérieure ou égale à environ 4 mm/s et/ou inférieure ou égale à environ 7 mm/s.

6. Procédé tel que revendiqué dans la revendication 4, dans lequel la deuxième vitesse de déplacement «V2" » est supérieure ou égale à environ 20 mm/s et/ou inférieure ou égale à environ 30 mm/s.

7. Procédé tel que revendiqué dans la revendication 1, dans lequel, avant la découpe, la lame de coupe (25) est chauffée à une température de préchauffage «T1» supérieure à une température de découpe «T2».

8. Procédé tel que revendiqué dans la revendication 1, dans lequel, après la découpe, la lame de coupe (25) est chauffée à une température de nettoyage «T3» supérieure à une température de découpe «T2».

9. Procédé tel que revendiqué dans la revendication 7, dans lequel la température de préchauffage «T1» est supérieure ou égale à environ 330°C et/ou inférieure ou égale à environ 380°C.

10. Procédé tel que revendiqué dans la revendication 8, dans lequel la température de nettoyage «T3» est supérieure ou égale à environ 450°C et/ou inférieure ou égale à environ 650°C.

11. Procédé tel que revendiqué dans la revendication 1, dans lequel, au cours du déplacement à travers l'ensemble d'obturation continu (12), la lame de coupe (25) est chauffée à une température de découpe «T2» supérieure ou égale à environ 280°C et/ou inférieure ou égale à environ 320°C.

12. Procédé tel que revendiqué dans la revendication 1, dans lequel avant l'alimentation, l'ensemble d'obturation continu (12) comprenant un film thermoplastique autoportant (11) et une couche de matériau polymère d'obturation (10) associée audit film thermoplastique autoportant (11) et supportée par celui-ci, est maintenu enroulé sur une bobine avec un film protecteur (20) disposé sur la face de la couche du matériau polymère d'obturation (10) à l'opposé du film thermoplastique autoportant (11) et où le film protecteur (20) est retiré de la couche de matériau polymère d'obturation (10) au moins avant la découpe.

13. Procédé tel que revendiqué dans la revendication 1, comprenant, avant le déplacement de la lame de coupe (25), le fait : de faire avancer l'ensemble d'obturation continu (12) le long d'une direction de transport (A) parallèle à l'extension longitudinale de l'ensemble sur une distance prédéterminée ; d'arrêter l'ensemble d'obturation continu (12) ; de soulever une partie dudit ensemble d'obturation continu (12) disposée à proximité du trajet de découpe (C).

14. Appareil pour construire des pneus auto-obturants pour roues de véhicule, comprenant :
- un tambour de formage (14) ;
- un convoyeur (16) définissant une surface de repos (23) pour un ensemble d'obturation continu (12) qui est mobile le long d'une direction d'alimentation (A) ;
- une lame de coupe (25) chauffée au moyen d'une circulation de courant à une température «T», montée au-dessus du convoyeur (16) et mobile le long d'un trajet de découpe (C) transversal à la direction d'alimentation (A) à une vitesse «V» ;
dans lequel le tambour de formage (14) est relié de manière fonctionnelle au convoyeur (16) pour recevoir l'ensemble d'obturation (12) découpé à la dimension voulue par la lame de coupe (25),
**caractérisé en ce que** l'unité de commande (31) est reliée de manière fonctionnelle à la lame de coupe (25) pour commander et réguler la température «T» et la vitesse «V» le long dudit trajet de découpe (C).

15. Appareil selon la revendication 14, dans lequel le convoyeur (16) comprend :
- une première partie (17a) et une deuxième partie (17b) disposées consécutivement le long de la direction d'alimentation (A) et dans lequel le convoyeur (16) comprend :
- un élément de positionnement (29) placé entre la première partie (17a) et la deuxième partie (17b), s'étendant le long d'une direction transversale à la direction d'alimentation (A) et mobile entre une position abaissée, dans laquelle il se trouve sous la surface de repos (23) et une position élevée, dans laquelle il émerge au-delà de ladite surface de repos (23).
